# EUROPÄISCHE PATENTSCHRIFT

(11) **EP 2 489 903 B1**
(45) Veröffentlichungstag und Bekanntmachung des Hinweises auf die Patenterteilung: **22.01.2014**
(21) Anmeldenummer: 11189503.3
(22) Anmeldetag: 17.11.2011
(51) Int. Cl.: F16H 57/08, B21D 53/28

(54) **Planetenradträger**
Planet carrier
Porte-satellites

(30) Priorität: 16.02.2011 DE 102011004192
(43) Veröffentlichungstag der Anmeldung: 22.08.2012
(73) Patentinhaber: Schaeffler Technologies AG & Co. KG, 91074 Herzogenaurach (DE)
(72) Erfinder: Smith, Terence, 91074 Herzogenaurach (DE)

(56) Entgegenhaltungen:
- DE-C1- 4 138 548
- JP-A- 2005 299 891

## Beschreibung

Die Erfindung bezieht sich auf einen Planetenradträger mit einem Grundkörper der als Blechumformteil gefertigt ist und einen Grundplattenabschnitt mit daran über Stegabschnitte angebundenen Deckplattenabschnitten umfasst, wobei zwischen dem Grundplattenabschnitt und dem jeweiligen Deckplattenabschnitt ein Radraum gebildet ist, zur Aufnahme eines Planetenrades, wobei jeder Stegabschnitt mit dem Grundplattenabschnitt über eine erste Biegzone und mit dem jeweiligen Deckplattenabschnitt über eine zweite Biegezone verbunden ist.

Ein Planetenradträger der vorangehend genannten Art ist aus der gattungsgemäßen DE 41 38 548 C1 bekannt. Bei diesem Planetenradträger verlaufen die Biegezonen der Stegabschnitte im wesentlichen tangential zum Teilkreis der Planetenradachsen. Die Deckplattenabschnitte bilden in ihrer Gesamtheit eine Ringstruktur die an einen Ringflansch einer Hohlwelle angeschweißt ist.

Aus US 7,100,416 B2 ist ebenfalls ein als Blechumformteil gefertigter Planetenradträger für eine Planetengetriebestufe bekannt. Zur Herstellung dieses Planetenradträgers wird zunächst eine Topfstruktur gebildet. Nachfolgend wird der randnahe Bereich dieser Topfstruktur radial einwärts eingezogen.

Die bei Anlassergetrieben derzeit am häufigsten eingesetzte Bauform eines Planetenradträgers setzt sich aus mehreren separat gefertigten Bauteilen zusammen. Typischerweise umfasst der Planetenradträger des Anlassergetriebes hierbei eine Grundplatte und einen hiervon axial beabstandeten Ring, wobei die Grundplatte und jener Ring durch mehrere in entsprechende Bohrungen eingepresste Bolzen miteinander gekoppelt sind. In dem zwischen der Grundplatte und dem Ring gebildeten Zwischenraum sind mehrere Planentenräder aufgenommen und über jene Bolzen drehbar gelagert. Die Grundplatte dient hierbei der Ableitung des Abtriebsmomentes und ist über eine Einrückmechanik mit einem Anlasserritzel gekoppelt.

### Aufgabe der Erfindung

Der Erfindung liegt die Aufgabe zugrunde, einen Planetenradträger, insbesondere für ein Anlassergetriebe zu schaffen der sich durch ein vorteilhaftes mechanisches Betriebsverhalten auszeichnet und unter fertigungstechnischen Gesichtspunkten vorteilhaft herstellbar ist.

### Erfindungsgemäße Lösung

Diese Aufgabe wird erfindungsgemäß gelöst durch einen Planetenradträger mit einem zum Umlauf um eine Umlaufachse vorgesehenen Grundkörper wobei:
- der Grundkörper als Blechumformteil gefertigt ist und einen Grundplattenabschnitt, mehrere Stegabschnitte und mehrere Deckplattenabschnitte umfasst,
- die Deckplattenabschnitte über die Stegabschnitte mit dem Grundplattenabschnitt verbunden sind,
- zwischen dem Grundplattenabschnitt und dem jeweiligen Deckplattenabschnitt ein Radraum gebildet ist, zur Aufnahme eines innerhalb des Radraumes um eine Planetenradachse drehbaren Planetenrades,
- jeder Stegabschnitt mit dem Grundplattenabschnitt über eine erste Biegezone und mit dem jeweiligen Deckplattenabschnitt über eine zweite Biegezone verbunden ist und der Grundplattenabschnitt durch seine von der Umlaufachse maximal radial auskragenden Bereiche einen Hüllkreis definiert,
- für jeden Radraum der Verlauf der ersten Biegezone derart festgelegt ist, dass in einer Projektion in eine zur Umlaufachse radiale Ebene eine sich entlang der ersten Biegezone erstreckende erste Biegeachse eine erste Bezugsgerade innerhalb des Hüllkreises des Grundplattenabschnitts schneidet, und
- die genannte erste Bezugsgerade durch die Umlaufachse verläuft und dabei eine zweite Bezugsgerade die als solche die Umlaufachse und die Planetenachse des jeweiligen Radraumes verbindet, senkrecht schneidet.

Dadurch wird es auf vorteilhafte Weise möglich, aus einem kompakten Materialzuschnitt einen Planetenradträger zu schaffen der sich durch eine hohe Strukturfestigkeit auszeichnet. Das erfindungsgemäße Konzept macht es möglich, die Stegabschnitte relativ nahe an den zur Aufnahme der Planetenräder erforderlichen Radraum heranzuführen. Hierdurch ergibt sich eine hochsteife Verbindung der Deckplattenabschnitte mit dem Grundplattenabschnitt. Durch die hochsteife Abstützung der Deckplattenabschnitte wird eine hohe Tragfähigkeit der zur Lagerung der Planetenräder vorgesehenen Achsbolzen erreicht.

Alternativ zu einer im wesentlichen ebenen Gestaltung der Stegabschnitte und einer im wesentlichen winkligen Abkantung derselben über enge Biegeradien ist es auch möglich, die Innenradien derart groß zu bemessen, dass der jeweilige Stegabschnitt als im wesentlichen durchgängig, zum jeweiligen Radraum hin konkav gekrümmt erscheint. Die Biegeachsen können hierbei letztlich miteinander deckungsgleich sein.

Gemäß einer besonders bevorzugten Ausführungsform der Erfindung ist die Lage der ersten Biegezone so gewählt, dass der Schnittpunkt der ersten Biegeachse mit der ersten Bezugsgeraden innerhalb des Umlaufkreises der Planetenradachsen liegt. Bei dieser Variante wird es möglich, die Stegabschnitte so auszurichten dass sich diese relativ nahe am Radraum entlang erstrecken. Insbesondere wird es bei dieser Variante möglich, die erste Biegezone so festzulegen, dass die erste Biegeachse im wesentlichen parallel zur zweiten Bezugsgeraden verläuft, d.h. die erste Bezugsgerade senkrecht schneidet.

Die zweite Biegezone über welche der Deckplattenabschnitt mit dem zugeordneten Stegabschnitt gekoppelt ist verläuft vorzugsweise parallel zur ersten Biegezone. Der Abstand dieser beiden Biegezonen entspricht im wesentlichen der geforderten axialen Höhe des Radraumes, d.h. der axialen Baulänge des aufzunehmenden Planetenrades.

Der zur Fertigung des Planetenträgers vorbereitete Materialzuschnitt ist vorzugsweise so konturiert, dass der Deckplattenabschnitt in seinem dem Hüllkreis zugewandten Randbereich eine Konturierung aufweist die im wesentlichen der dem Hüllkreis benachbarten Konturierung des Grundplattenabschnitts entspricht. Die Deckplattenabschnitte können in ihrem der Umlaufachse des Planetenträgers zugewandten Innenbereich so konturiert sein, dass diese relativ nahe an das zugeordnete Sonnenrad heranragen.

In vorteilhafter Weise kann der Grundkörper mit Sicken versehen werden. Der Verlauf dieser Sicken ist vorzugsweise so gewählt, dass hierdurch der Grundplattenabschnitt ausgesteift wird. Die Sicken können auch in den Stegabschnitten und in den Deckplattenabschnitten ausgebildet sein. Gemäß einem besonderen Aspekt der vorliegenden Erfindung ist es möglich, nach dem Aufrichten der Stegabschnitte und dem Abkanten der Deckplattenabschnitte Kehlsicken in den Grundkörper derart einzubringen, dass diese die Biegestellen quer durchsetzen. Hierdurch wird es möglich, eine besonders biegesteife Koppelung der Deckplattenabschnitte mit dem Grundplattenabschnitt zu erreichen.

Die Fertigung des erfindungsgemäßen Planetenradträgers erfolgt vorzugsweise durch Verarbeitung eines Blech-, insbesondere Bandmateriales durch sukzessive Abfolge von Umformschritten. Insbesondere bei der Fertigung des Planetenträgers aus einem Bandmaterial können die Schnitte im Material so geführt werden, dass zunächst ein Bauteilsverband erhalten bleibt und die einzelnen Materialabschnitte zusammenhängend abfolgend in die einzelnen Umformstationen wandern. Die Umformung des Grundkörpers, insbesondere die Biegeumformung wird vorzugsweise als Kaltformung bewerkstelligt. Sofern die Umformung als Warmumformung abgewickelt wird, kann die Bauteilserwärmung auf bestimmte Zonen, insbesondere die Biegezonen, sowie die zur Bildung der Abtriebsverzahnung herangezogenen Zonen oder auch der Planetenrad Anlaufflächen beschränkt werden. Die Bauteilserwärmung kann insbesondere durch Widerstandsheizung, oder lokale Flammheizung bewerkstelligt werden.

Weiterhin ist es in vorteilhafter Weise möglich, den Grundkörper einer Gefügebehandlung zu unterziehen durch welche dieser beispielsweise lokal gehärtet wird. Soweit diese Gefügebehandlung die Übergangszonen zwischen den Stegabschnitten und dem Grundplattenabschnitt bzw. den Deckplattenabschnitten betrifft, wird diese Gefügebehandlung erst nach Abschluss des Biegeumformschrittes vorgenommen.

Der erfindungsgemäße Planetenradträger ist vorzugsweise so gestaltet, dass dieser einen integral an den Grundplattenabschnitt angebundenen und hierbei durch Umformung gefertigten Nabenbuchsenabschnitt umfasst. Dieser Nabenbuchsenabschnitt ist vorzugsweise derart gestaltet, dass dieser in seinem Innenbereich, eine Verzahnung aufweist. Diese radial oder axial gerichtete Verzahnung kann durch plastische Materialumformung, insbesondere durch einen entsprechenden Pressstempel gefertigt sein. Es ist auch möglich, diese Verzahnung zu fertigen, indem in den zunächst zylindrisch gezogenen Nabenbuchsenabschnitt ein entsprechender Kern eingesetzt wird und dann der Nabenbuchsenabschnitt radial von außen auf diesen Kern gespannt wird, so dass sich das im Kern vorgesehene Profil in die Innenwandung des Nabenbuchsenabschnitts einprägt. Der Kern kann dann nachfolgend abgezogen werden. Eine hinreichend belastbare Mitnehmergeometrie kann auch ohne Anformung eines Nabenbuchsenabschnitts realisiert werden, indem im Grundplattenabschnitt im Bereich der Zentralöffnung eine radial, oder auch stirnseitig eingeformte Verzahnung ausgebildet wird.

Der gesamte erfindungsgemäß gefertigte Planetenradträger kann vorzugsweise im Rahmen eines Kalibrierschrittes noch derart nachbearbeitet werden, dass die geforderten Form- und Lagetoleranzen, insbesondere die Positionen der Lagerbohrungen für die Planetenradachsen gegenüber dem Nabenbuchsenabschnitt eingehalten werden. Es ist möglich, den erfindungsgemäß gefertigten Planetenradträger auch einer material-, insbesondere spanabhebenden Nachbehandlung zu unterziehen. Der Planetenradträger kann auch einer chemischen, insbesondere elektrochemischen Nachbehandlung, sowie einer Strahlbehandlung insbesondere Sand- oder Kugelstrahlbehandlung unterzogen werden.

Die zur Aufnahme der Planetenradlagerbolzen vorgesehenen Bohrungen in dem Grundplattenabschnitt und in dem Deckplattenabschnitt können so gefertigt werden, dass ein Teil des in dem Bohrungsbereich zunächst vorhandenen Materiales durch plastische Umformung verdrängt wird, so dass sich im Umfangsbereich der Bohrungen eine Materialverdickung ergibt.

Gemäß einem besonderen Aspekt der vorliegenden Erfindung werden die Bohrungen in dem Grundplattenabschnitt und in den Deckplattenabschnitten vorzugsweise erst gefertigt, nachdem die Biegeumformung, d.h. das Abkanten der Deckplattenabschnitte und das Aufrichten der Stegabschnitte bewerkstelligt ist. Diese Bohrungen können spanabhebend gebohrt oder gestanzt oder durch anderweitige Bearbeitungsschritte erzeugt werden. Eine entsprechende Bohr oder Stanzmatrize wird vorzugsweise über den Nabenbuchsenabschnitt zentriert. Hierdurch wird es möglich, eine hohe Positionsgenauigkeit für die Lage der Planetenradachsen gegenüber der Umlaufachse des Planetenradträgers zu erreichen.

Die aufgeklappten Stegabschnitte und die wiederum gegenüber diesen Stegabschnitten abgeklappten Deckplattenabschnitte bilden gemeinsam mit dem jeweiligen Tragarm des Grundplattenabschnitts eine den jeweiligen Planetenradaufnahmeraum einseitig umgreifende U-förmige, oder U-bügelartige Tragstruktur. Zwischen diesen entlang eines Teilkreises abfolgenden Tragstrukturen verbleibt ein Zwischenraum. Insgesamt kann auf Grundlage der erfindungsgemäßen Technik ein Planetenradträger mit relativ geringem Eigengewicht gefertigt werden. Die Stegabschnitte sind vorzugsweise der Planetenradachse zugewandt und nahe an den Planetenrädern angeordnet. Die Stegabschnitte sind vorzugsweise parallel, oder in einem allenfalls geringen spitzen

Winkel zu der vorangehend genannten zweiten Bezugsgeraden ausgerichtet.

Die Stegabschnitte können auch als zum Planetenradraum hin gewandte Konkavstrukturen gestaltet sein. Die Krümmung der Stegabschnitte kann hierbei so festgelegt sein, dass die durch die Stegabschnitte gebildete und dem Planetenradraum zugewandte Wandung im wesentlichen äquidistant zum Kopfkreis des jeweiligen Planetenrades verläuft. Die Ausrichtung dieser Konkavflächen ist vorzugsweise so getroffen, dass der jeweilige Stegabschnitt sich im wesentlichen radial erstreckt, und der Flächenschwerpunkt des Stegabschnittes auf dem Teilkreis der Planetenradachsen, oder zumindest relativ nahe an diesem Teilkreis liegt.

Weitere Einzelheiten und Merkmale der Erfindung ergeben sich aus der nachfolgenden Beschreibung in Verbindung mit der Zeichnung. Es zeigt:
- **Figur 1**: eine perspektivische Darstellung eines erfindungsgemäßen Planetenradträgers der hier zur besseren Veranschaulichung bereits mit Planetenrädern bestückt ist;
- **Figur 2**: eine Draufsicht auf den durch Biegeumformung gefertigten erfindungsgemäßen Planetenradträger;
- **Figur 3**: eine Axialschnittdarstellung durch den Planetenradträger wobei ein in dieser Darstellung unterhalb einer Umlaufachse gezeichneter Bereich um 60° in die Darstellungsebene geklappt dargestellt ist;
- **Figur 4a**: eine Darstellung des Materialzuschnitts zur Fertigung des Planetenradträgers nach Figur 2;
- **Figur 4b**: eine Darstellung des Materialzuschnitts nach Figur 4a, hier mit vorzugsweise eingeformten Sicken;

- **Figur 4c**: eine Detaildarstellung zur Veranschaulichung der Sickengeometrie;
- **Figur 4d**: eine Detaildarstellung zur Veranschaulichung der Geometrie im Bereich einer Bohrung zur Lagerung das Planetenradlagerzapfens;
- **Figur 4e**: eine Skizze zur Veranschaulichung der Geometrie des durch den Tragarmabschnitt, den Stegabschnitt und den Deckplattenabschnitt gebildeten U-förmigen Bügels, hier mit engen Biegeradien;
- **Figur 4f**: eine Skizze zur Veranschaulichung der Geometrie des durch den Tragarmabschnitt, den Stegabschnitt und den Deckplattenabschnitt gebildeten U-förmigen Bügels, hier mit unmittelbar aneinander angrenzenden Biegezonen mit großen Biegeradien;
- **Figur 4g**: eine Skizze zur Veranschaulichung der Geometrie des durch den Tragarmabschnitt, den Stegabschnitt und den Deckplattenabschnitt gebildeten U-förmigen Bügels, hier mittleren Biegeradien und einer zusätzlichen Radialrinne;
- **Figur 5**: eine Darstellung zur Veranschaulichung einer weiteren Variante eines Materialzuschnitts zur Fertigung eines erfindungsgemäßen Planetenradträgers;
- **Figur 6**: eine Skizze zur Veranschaulichung einer relativ platzsparenden Anordnung einer Serie von Zuschnitten nach Figur 5 in einem Bandmaterial in Standardbreite.
- **Figur 7**: eine Darstellung zur Veranschaulichung einer weiteren Variante eines Materialzuschnitts zur Fertigung eines erfindungsgemäßen Planetenradträgers, hier mit beidseitiger Anbindung der Deckplattenabschnitte an den Grundplattenabschnitt;

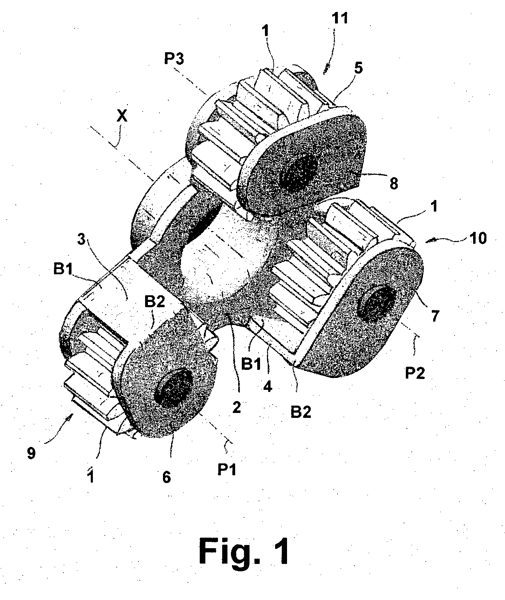

In Figur 1 ist ein erfindungsgemäßer Planetenradträger mit eingesetzten Planetenrädern 1, dargestellt. Dieser Planetenradträger umfasst einen zum Umlauf um eine Umlaufachse X vorgesehenen Grundkörper. Der Grundkörper ist als Blechumformteil gefertigt und umfasst einen Grundplattenabschnitt 2, mehrere Stegabschnitte 3, 4, 5 und mehrere Deckplattenabschnitte 6, 7, 8.

Die Deckplattenabschnitte 6, 7, 8 sind über die Stegabschnitte 3, 4, 5 mit dem Grundplattenabschnitt 2 verbunden. Zwischen dem Grundplattenabschnitt und dem jeweiligen Deckplattenabschnitt ist jeweils ein Radraum 9, 10, 11 gebildet, zur Aufnahme eines innerhalb des Radraumes 9, 10, 11 um eine Planetenradachse P1, P2, P3 drehbaren Planetenrades 1.

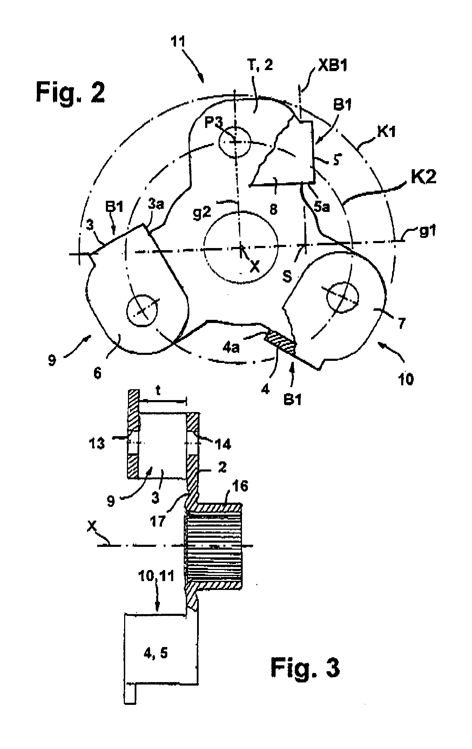

Jeder Stegabschnitt 3, 4, 5 ist mit dem Grundplattenabschnitt 2 über eine erste Biegezone B1 und mit dem jeweiligen Deckplattenabschnitt 6, 7, 8 über eine zweite Biegezone B2 verbunden. Der erfindungsgemäße Planetenradträger zeichnet sich durch eine besondere Lage der Biegezonen B1, B2 aus. Um die Lage dieser Biegezonen B1, B2 zu beschreiben wird nachfolgend in Verbindung mit Figur 2 auf einen an sich abstrakten Hüllkreis K1 sowie eine abstrakte erste Bezugsgerade g1 und eine ebenfalls abstrakte zweite Bezugsgerade g2 Bezug genommen.

Wie aus Figur 2 ersichtlich entspricht der Hüllkreis K1 einem Kreis, der als solcher von dem radial am weitesten auskragenden Tragarm T des Grundplattenabschnitts 2 definiert wird, wenn der Grundplattenabschnitt 2 um die Umlaufachse X rotiert.

Für jeden Radraum 9, 10, 11 ist der Verlauf der ersten Biegezone B1 derart getroffen, dass in der hier vorliegenden Zeichnungsprojektion eine sich entlang der ersten Biegezone B1 erstreckende Biegeachse XB1 eine erste Bezugsgerade g1 innerhalb des Hüllkreises K1 des Grundplattenabschnitts 2 schneidet. Die genannte erste Bezugsgerade g1 verläuft durch die Umlaufachse X und schneidet dabei eine zweite Bezugsgerade g2 die als solche die Umlaufachse X und die Planetenradachse (hier P3) des jeweiligen Radraumes (hier 11) verbindet, senkrecht.

Bei dem hier gezeigten, besonders bevorzugten Ausführungsbeispiel ist die Lage der Biegezone B1 für den jeweiligen Radraum 11 derart festgelegt, dass der Schnittpunkt S der Projektion der Biegeachse XB1 mit der Bezugsgeraden g1 sogar innerhalb des Umlaufkreises K2 der Planetenradachsen P1, P2, P3 liegt.

Die Biegeachse XB1 ist bei diesem Ausführungsbeispiel derart ausgerichtet, dass diese im wesentlichen parallel zur zweiten Bezugsgeraden g2 verläuft. Die Stegabschnitte 3, 4, 5 bilden kleine, im wesentlichen rechteckige Verbindungsbügel. Die Stegabschnitte 3, 4, 5 sind so bemessen, dass diese relativ nahe an den Hüllkreis K1 heranragen und noch einen ausreichenden Sicherheitsabstand zum Innenkopfkreis eines Hohlrades einhalten in welches der Planetenradträger einzusetzen ist. Die Position der radial innen liegenden Stegflächen 3a, 4a, 5a ist so festgelegt, dass noch ein ausreichender Sicherheitsabstand zu dem Kopfkreis eines hier nicht näher dargestellten Sonnenrades des entsprechend unter Einschluss des erfindungsgemäßen Planetenradträgers gebildeten Getriebes gewährleistet ist. Insgesamt werden die Stegabschnitte vorzugsweise so gestaltet, dass diese eine relativ große Breite aufweisen. Hierdurch wird die Steifigkeit der Einbindung der Deckplattenabschnitte 6, 7, 8 in den Planetenradträger erhöht. In den Endbereichen der Biegezonen B1 können Freischnitte vorgesehen sein, die als solche die Biegeumformung erleichtern und die Materialbelastung in diesen Endbereichen etwas vergleichmäßigen.

Die Deckplattenabschnitte 6, 7, 8 sind bei diesem Ausführungsbeispiel so gestaltet, dass jeder Deckplattenabschnitt 6, 7, 8 in seinem dem Hüllkreis K1 zugewandten Randbereich eine Konturierung aufweist die im wesentlichen der dem Hüllkreis K1 benachbarten Konturierung des Grundplattenabschnitts 2 bzw. des durch diesen gebildeten Tragarms T entspricht.

In Figur 3 ist in Form einer Axialschnittdarstellung der Aufbau des erfindungsgemäßen Planetenradträgers nach Figur 2 weiter veranschaulicht. Die in Richtung der Umlaufachse X gemessene Axialtiefe t der Stegabschnitte 3, 4, 5 ist derart bemessen, dass die in Figur 1 gezeigten Planetenräder 1 mit hinreichendem axialen Bewegungsspiel in dem jeweiligen Radraum 9, 10, 11 aufgenommen werden können. Die axiale Abstützung der Planetenräder kann ggf. unter Einlage von Anlaufscheiben erfolgen. Es ist auch möglich, im Umgebungsbereich der Achsbolzenbohrungen 13, 14 eine zum Planetenrad hin geringfügig, z.B. um 0,3mm vorspringende Ringstufe durch Prägung auszubilden. Diese Ringstufe bildet dann eine Anlauffläche, so dass auf etwaige Anlaufscheiben verzichtet werden kann.

Wie aus dieser Darstellung weiter ersichtlich ist der Grundkörper mit einem integral durch Umformung gefertigten Nabenbuchsenabschnitt 16 versehen. Dieser Nabenbuchsenabschnitt 16 ist durch einen Ziehvorgang gefertigt. Die Fertigung dieses Nabenbuchsenabschnitts erfolgt vorzugsweise in mehreren Umformstufen. Diese Umformstufen können so abgewickelt werden, dass eine Zieh- und Fliespressumformung erfolgt. Der Nabenbuchseabschnitt 16 kann hierbei insbesondere durch das Material gebildet werden das im ursprünglichen Blechzuschnitt den Bereich des Nabenbuchsenabschnitts 16 zunächst bedeckt. Vorzugsweise sind im Umgebungsbereich des Nabenbuchsenabschnitts 16 in dem Grundplattenabschnitt 2 Sickengeometrien 17 ausgebildet durch welche hinsichtlich der Anbindung des Nabenbuchsenabschnitts 16 an den Grundplattenabschnitt 2 eine hohe Biege- und Torsionsfestigkeit erreicht wird.

Wie aus der Darstellung nach Figur 3 weiter ersichtlich, ist im Innenbereich des Nabenbuchsenabschnitts 16 eine Verzahnung vorgesehen. Diese Verzahnung kann durch spanabhebende Bearbeitung, insbesondere durch eine Räumbearbeitung gefertigt werden. Vorzugsweise wird diese Verzahnung jedoch zumindest primär durch eine plastische Materialumformung gebildet, indem beispielsweise der Nabenbuchsenabschnitt radial von außen gegen einen Kernstempel mit entsprechender Profilierung gepresst wird. Der Nabenbuchsenabschnitt 16 kann auch durch Einpressen eines separaten Buchsenelementes gefertigt werden.

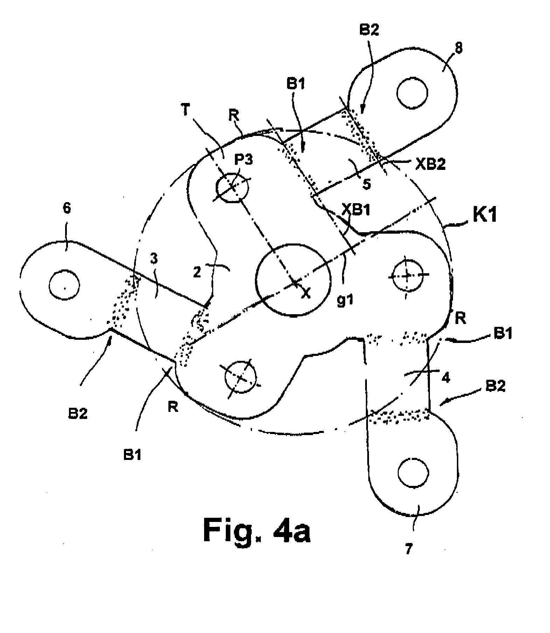

In Figur 4a ist ein Materialzuschnitt dargestellt aus welchem der vorangehend beschriebene erfindungsgemäße Planetenradträger durch Biegeumformung entlang besonders positionierter, hier gepunktet angedeuteter Biegestellen B1, B2 gefertigt wird. Der Materialzuschnitt selbst kann als Schneid-, insbesondere Laserschneidteil gefertigt sein. Weiterhin kann der Materialzuschnitt auch als Stanzteil gefertigt sein. Der Schneid- und/oder Stanzvorgang kann so abgewickelt werden, dass noch ein Restverbund des Zuschnitts im Ausgangsmaterial, insbesondere einem Blechband gegeben ist, so dass der Zuschnitt im Verband durch die einzelnen Bearbeitungs- und Umformstationen transportiert werden kann. Da in dieser Darstellung die Positionen der Biegeachsen XB1 besonders klar erkennbar sind wird hier nochmals die besondere Position derselben erläutert. So liegen die radial am weitesten von der Umlaufachse X beabstandeten Randpunkte R auf dem Hüllkreis K1. Die Biegeachse XB1 schneidet die Bezugsgerade g1 innerhalb des Hüllkreises K1. Die Bezugsgerade g1 verläuft durch die Umlaufachse X und steht dabei senkrecht zu einer zweiten Bezugsgeraden g2. Die zweite Bezugsgerade g2 verläuft durch die Planetenradachse P3 und die Umlaufachse X. Die beiden Bezugsgeraden g1 und g2 stellen letztlich ein Achsenkreuz dar dessen Ursprung auf der Umlaufachse X liegt, wobei eine Achse dieses Achsenkreuzes durch die Planetenradachse verläuft. Dieses Geometriekonzept ist hier beispielhaft für einen der Tragarme T gezeigt und wird entsprechend auch für die jeweiligen weiteren Tragarme des Grundplattenabschnitts 2 angewendet. Die Deckplattenabschnitte 6, 7, 8 sind über die Biegestellen B2 mit dem entsprechenden Stegabschnitt 3, 4, 5 verbunden. Diese Biegestellen B2 sind hier ebenfalls gepunktet angedeutet. Diese Biegestellen B2 definieren Biegeachsen XB2. Die Biegeachsen XB1 und XB2 verlaufen zueinander im wesentlichen parallel. Der Abstand dieser Biegeachsen entspricht in etwa dem in Figur 3 eingetragenen Maß t. Vorzugsweise erfolgt die Biegeumformung entlang der Biegestellen B1 und B2 derart, dass auch im Innenkantenbereich noch ein Biegeradius erreicht wird der wenigstes 25% der Blechdicke beträgt. Soweit der in Figur 3 gezeigte Nabenbuchsenabschnitt 16 durch plastische Materialumformung integral mit dem Blechzuschnitt gefertigt wird, wird dieser vorzugsweise in das Material eingeformt, bevor die hier erkennbare Kontur freigeschnitten wird. Der Schneidvorgang kann dann nach diesem Umformschritt erfolgen, wobei der Schnittverlauf an dem gebildeten Nabenbuchsenabschnitt festgelegt wird.

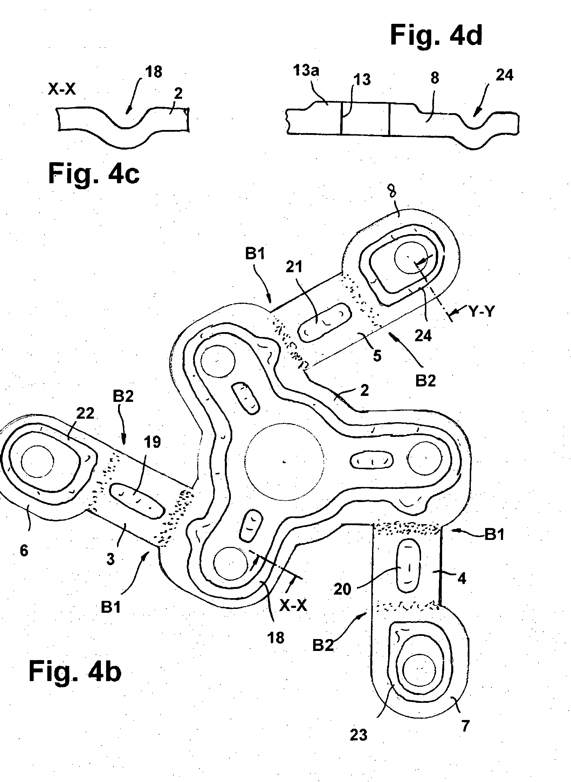

Wie in den Figuren 4b, 4c und 4d veranschaulicht, ist es möglich, durch Biege, Präge-, und Fließpressumformung an dem Materialzuschnitt Sondergeometrien auszubilden durch welche die Strukturfestigkeit weiter erhöht wird. In dem in Figur 4b gezeigten Materialzuschnitt ist im Grundplattenabschnitt 2 eine randnah umlaufende Versteifungssicke 18 ausgebildet. Auch die Stegabschnitte 3, 4, 5 sind mit Sicken 19, 20, 21 versehen. In den Deckplattenabschnitten 6, 7, 8 sind ebenfalls Sicken 22, 23, 24 ausgebildet. Diese Sicken können als relativ flache Sicken ausgebildet sein und beispielsweise den in Figur 4c skizzierten Querschnitt aufweisen. Jene Figur 4c zeigt hier beispielhaft den Sickenund Materialquerschnitt des Grundplattenabschnitts 2 im Bereich des in Figur 4b eingetragenen Detailschnitts X-X

Figur 4d veranschaulicht eine bevorzugte Querschnittsgestaltung des Deckplattenabschnitts 8. Der Verlauf der entsprechenden Schnittfläche ist in Figur 4b als Schnitt Y-Y gekennzeichnet. Wie aus dieser Darstellung erkennbar, ist im Umgebungsbereich der Bohrung 13 eine Materialverdickung 13a realisiert. Diese Materialverdickung ist durch Pressumformung des Materialzuschnitts gefertigt und besteht aus Material das zunächst den Bereich der Bohrung 13 bedeckte. Durch diese Materialverdickung wird eine Anlaufringstufe realisiert durch welche auch die Lochleibungspressung innerhalb der Bohrung 13 reduziert wird. Durch die Sicke 24 wird der Deckplattenabschnitt 8 ausgesteift.

Es ist möglich, nach dem Aufbiegen der Stegabschnitte 3, 4, 5 die Sicken 19, 20, 21 mit der Sicke 18 zu verbinden. Hierzu wird eine die entsprechenden Biegezonen B1 quer durchsetzende Sicke in die Biegezone eingepresst. Das Abbiegen der Deckplattenabschnitte 6, 7 und 8 erfolgt vorzugsweise nach diesem Aussteifen der Biegezonen B1. Es ist möglich, auch die Biegezonen B2 nach dem Abwinkeln der Deckplattenabschnitte durch Sicken auszusteifen die als solche die Biegezonen B2 durchqueren.

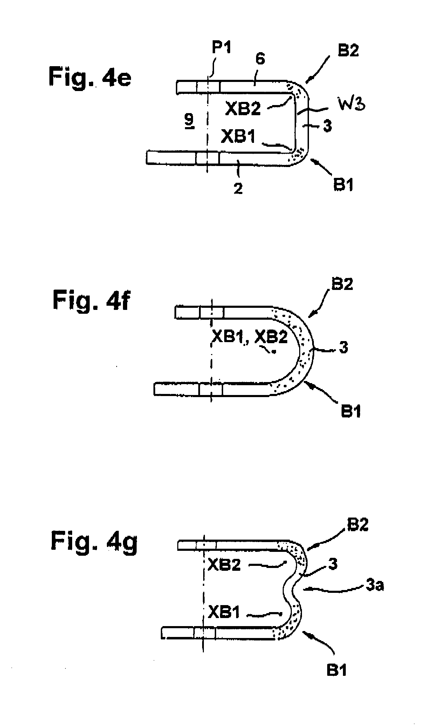

In Figur 4e ist in Form einer stark vereinfachten Skizze die Gestaltung der Übergänge zwischen dem Grundplattenabschnitt 2, dem Stegabschnitt 3 und dem Deckplattenabschnitt 6 dargestellt. Der Stegabschnitt 3 ist hier als im wesentlichen ebene Struktur ausgeführt und die Biegezonen B1, B2 weisen relativ enge Biegeradien auf. Die Biegeachsen XB1 und XB2 , d.h. die Zentren der Biegeradien liegen relativ nahe an den Innenwandungen des zur Aufnahme eines Planetenrades vorgesehene Planetenradaufnahmeraumes 9. Die Innenwandung W3 ist im wesentlichen eben gestaltet und der Planetenradachse P1 zugewandt. Für die Ausrichtung der Biegeachsen XB1 und XB2 im Gesamtsystem wird auf die Ausführungen zu Figur 2 verwiesen.

In Figur 4f ist ebenfalls in Form einer stark vereinfachten Skizze eine Ausführungsform des Stegabschnittes 3 dargestellt, bei welcher der Stegabschnitt 3 als gekrümmte Wandung ausgeführt ist. Bei dieser Variante gehen die Biegezonen B1, B2 unmittelbar ineinander über. Die Biegeradien sind derart groß bemessen, dass die Biegezentren, bzw. die durch diese definierten Biegeachsen XB1, XB2 in etwa deckungsgleich verlaufen.

In Figur 4g ist eine Ausführungsform eines Stegabschnittes 3 skizziert, bei welcher in den Biegezonen B1, B2 relativ große Biegeradien realisiert sind und zudem im Zwischenbereich zwischen den Biegezonen B1, B2 eine Rinne 3a eingestaucht ist. Bei dieser Variante ergeben sich im Bereich der Biegezonen B1, B2 geringere Materialbelastungen als bei der Variante nach Figur 4e, und der Stegabschnitt 3 beansprucht weniger Raum als bei der Variante nach Figur 4f.

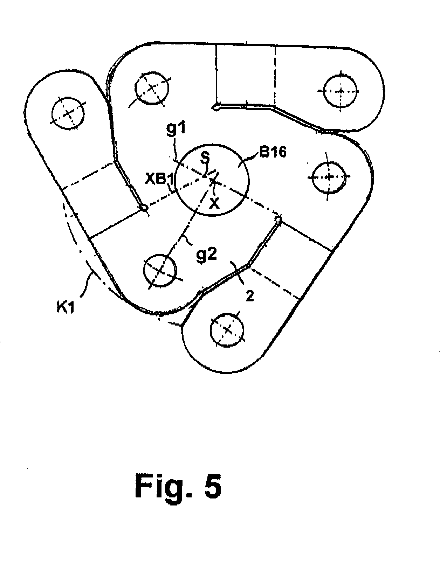

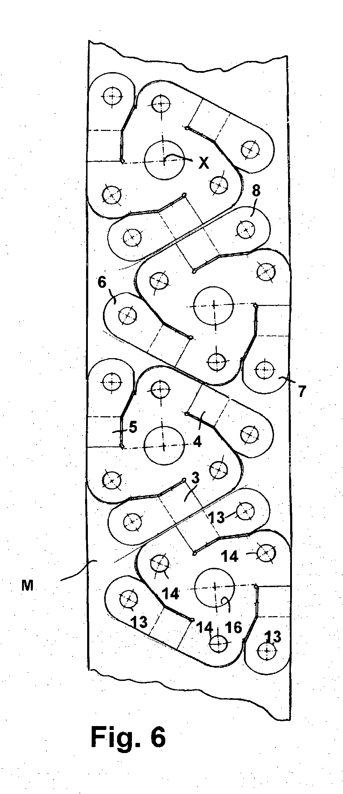

In Figur 5 ist eine weitere Variante eines erfindungsgemäßen Materialzuschnittes dargestellt. Bei dieser Variante schneidet die Biegeachse XB1 die Bezugsgerade g1 innerhalb der Nabenbohrung B16. Der Schnittpunkt S ist hier nur um ein geringes Maß, z.B. weniger als 20% des Durchmessers des Hüllkreises K1 von der Umlaufachse X entfernt. Die dem Grundplattenabschnitt 2 zugewandte Innenkontur der aufzubiegenden Abschnitte entspricht über eine große Strecke der Außenkontur des Grundplattenabschnitts, so dass die Trennung der Bauteilsabschnitte aus dem Grundmaterial stellenweise nur einen Schnitt erfordert. Die Biegeachse XB1 und die zweite Bezugsgerade g2 bilden einen spitzen Winkel der vorzugsweise weniger als 60° beträgt. Der in Figur 5 gezeigte Materialzuschnitt kann wie in Figur 6 skizziert mit geringem Materialverschnitt aus einem Bandmaterial gefertigt werden. Der Nabenabschnitt 16 wird vorzugsweise ausgebildet, bevor die weiteren Materialschnitte erfolgen. Die Umformung entlang der Biegezonen sowie auch die Bildung des Nabenabschnitts 16 kann erfolgen, indem die entsprechenden Bereiche lokal aufgeheizt werden. Die zur Aufnahme der Planetenradlagerbolzen vorgesehenen Bohrungen 13, 14 können in einem Arbeitschritt gefertigt werden der erst nach dem Aufbiegen der Stegabschnitte 3,4,5 und dem Herunterklappen der Deckplattenabschnitte 6, 7, 8 erfolgt. Hierdurch wird eine besonders präzise Positionierung der Bohrungen 13, 14 gegenüber der Umlaufachse X erreicht.

Nach dem Einbau der Planetenräder mit eingebauter Gleit- oder Wälzlagerung in den erfindungsgemäßen Planetenradträger werden die Achszapfen der Planetenräder vorzugsweise möglichst torsionssicher in dem Grundplattenabschnitt und in den entsprechenden Deckplattenabschnitten verankert. Hierdurch wird die Steifigkeit der Abstützung der Achszapfen weiter erhöht.

Durch die vorangehend beschriebenen Materialzuschnitte und Festlegung der Biegekanten wird es möglich, einen Planetenradträger als Blechumformteil zu fertigen, wobei dieser Planetenradträger Planetenradaufnahmetaschen aufweist deren Seitenwandabschnitte dem jeweiligen Planetenrad zugewandt und dabei im wesentlichen radial zur Umlaufachse des Planetenradträgers ausgerichtet sind.

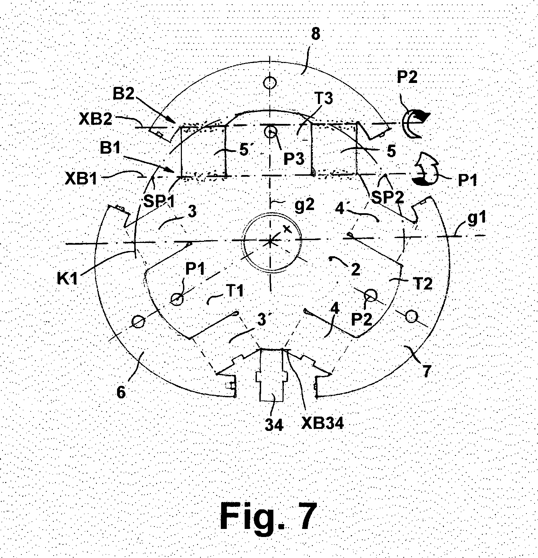

In Figur 7 ist eine weitere Variante eines Materialzuschnitts für einen erfindungsgemäßen Planetenradträger mit drei Tragarmen T1, T2, T3 dargestellt. Dieser Zuschnitt umfasst einen zum Umlauf um eine Umlaufachse X vorgesehenen Grundplattenabschnitt 2, mehrere Stegabschnitte 3, 3', 4, 4', 5, 5' und mehrere Deckenplattenabschnitte 6, 7, 8.

Die Deckplattenabschnitte 6, 7, 8 sind über die Stegabschnitte 3, 3', 4, 4', 5, 5' mit dem Grundplattenabschnitt 2 verbunden. Zwischen den durch den Grundplattenabschnitt 2 gebildeten Tragarmen T1, T2, T3 und dem jeweiligen Deckplattenabschnitt 6, 7, 8 wird nach der nachfolgend noch beschriebenen Biegeumformung jeweils ein Radraum gebildet, zur Aufnahme eines innerhalb des Radraumes um eine Planetenradachse P1, P2, P3 drehbaren Planetenrades.

Jeder Stegabschnitt 3, 3', 4, 4', 5, 5' ist mit dem Grundplattenabschnitt 2 über eine erste Biegzone B1 und mit dem jeweiligen Deckplattenabschnitt 6, 7, 8 über eine zweite Biegezone B2 verbunden. Der erfindungsgemäße Planetenradträger zeichnet sich durch eine besondere Lage der Biegezonen B1, B2 aus. Bei diesem Ausführungsbeispiel verläuft die Biegeachse XB1 im wesentlichen senkrecht zu einer die Planetenradachse P3 und die Umlaufachse X verbindenden Bezugsgeraden g2. Zudem schneidet die Biegeachse XB1 den die Tragarme T1, T2, T3 berührenden Hüllkreis K1 an zwei Schnittpunkten SP1 und SP2, wobei sich diese beiden Schnittpunkte SP1, SP2 in einem durch die Bezugsgerade g1 begrenzten Halbkreissegment befinden, in welchem sich auch die für diesen hier beschriebenen Tragarm T3 vorgesehene Planetenradachse P3 befindet. Die Bezugsgerade g1 verläuft senkrecht zu der die Planetenradachse P3 und die Umlaufachse X verbindenden Geraden g2. Die Schnittpunkte SP1 und SP2 liegen einander bezüglich der Geraden g2 gegenüber.

Die Biegeachse XB1 verläuft damit im wesentlichen parallel zur Geraden g1. Die Biegeachse XB2 verläuft parallel zur Biegeachse XB1. Der jeweilige Deckenabschnitt 6, 7, 8 ist über die Stegabschnitte 3, 3', 4, 4', 5, 5' mit dem Grundplattenabschnitt 2 verbunden. Bei diesem Ausführungsbeispiel ist jeder Deckplattenabschnitt 6, 7, 8 über zwei Stegabschnitte 3, 3', 4, 4', 5, 5' mit dem Grundplattenabschnitt 2 verbunden. Die Stegabschnitte 3, 3', 4, 4', 5, 5' befinden sich zu beiden Seiten des zugehörigen Tragarms T1, T2, T3.

Um aus dem gezeigten Zuschnitt zu dem räumlichen, als Planetenradträger fungierenden Strukturbauteil zu gelangen, erfolgt hier zunächst ein Aufrichten der Stegabschnitte 3, 3', 4, 4', 5, 5' um die ersten Biegezonen B1. Dies ist durch das Pfeilsymbol P1 angedeutet. Die Tragarmabschnitte T1, T2, T3 werden nicht aufgerichtet und erstrecken sich weiterhin in der Ebene des Grundplattenabschnitts 2. Im Rahmen eines nachfolgenden Schrittes erfolgt ein Abklappen der Deckplattenabschnitte 6, 7, 8 um die zweiten Biegezonen B2. Dies ist durch das Pfeilsymbol P2 angedeutet. Nach dieser Biegeumformung befinden sich die Deckplattenabschnitte 6, 7, 8 über den Tragarmen T1, T2, T3 und zwischen den Deckplattenabschnitten 6, 7, 8 und den Tragarmen T1, T2, T3 wird jeweils ein zur Aufnahme eines Planentenrades vorgesehener Radraum gebildet.

Zur Veranschaulichung einer weiteren Ausgestaltungsform ist im unteren Bereich der Darstellung des Materialzuschnitts beispielhaft für die weiteren entsprechenden Stellen des Materialzuschnitts ein Verbindungssteg 34 vorgesehen. Dieser kann um eine Biegeachse XB34 geklappt werden und damit eine Verbindungsstruktur bilden, welche die benachbarten Stegabschnitte 3', 4 verbindet und damit aussteift. An dem Materialzuschnitt können an geeigneter Stelle, insbesondere wie hier angedeutet Komplementärgeometrien ausgebildet sein, durch welche der Zusammenhalt der im Rahmen der Umformung aneinander gerückten Abschnitte weiter unterstützt werden kann.

Die erfindungsgemäße Technik zur Fertigung eines Planetenradträgers eignet sich insbesondere für Planentenradträger mit drei sowie auch mit vier Tragarmen. In der vorangegangenen Beschreibung wurden die besonderen Geometriemerkmale zum Teil nur für jeweils einen Tragarm des entsprechenden Ausführungsbeispieles beschrieben. Vorzugsweise ist bei dem Planetenradträger jeder Tragarm entsprechend gestaltet.

Die erfindungsgemäße Technik eignet sich auch zur Herstellung des Umlaufkorbes von Flach-Differentialgetrieben. Bei dieser Variante sind im Bereich des jeweiligen Tragarms zwei miteinander in Eingriff stehende Planetenräder vorgesehen. Anstelle eines einzigen Sonnenrades sind im Zentralbereich zwei axial abfolgende Zentralräder vorgesehen die dann mit dem entsprechenden Planetenrad in Eingriff stehen.

## Patentansprüche

1. Planetenradträger mit einem zum Umlauf um eine Umlaufachse (X) vorgesehenen Grundkörper wobei:
- der Grundkörper als Blechumformteil gefertigt ist und einen Grundplattenabschnitt (2), mehrere Stegabschnitte (3, 4, 5) und mehrere Deckplattenabschnitte (6, 7, 8) umfasst,
- die Deckplattenabschnitte (6, 7, 8) über die Stegabschnitte (3, 4, 5) mit dem Grundplattenabschnitt (2) verbunden sind
- zwischen dem Grundplattenabschnitt (2) und dem jeweiligen Deckplattenabschnitt (6, 7, 8) jeweils ein Radraum (9, 10, 11) gebildet ist, zur Aufnahme eines innerhalb des Radraumes um eine Planetenradachse (P1, P2, P3) drehbaren Planetenrades (1),
- jeder Stegabschnitt (3, 4, 5) mit dem Grundplattenabschnitt (2) über eine erste Biegezone (B1) und mit dem jeweiligen Deckplattenabschnitt (6, 7, 8) über eine zweite Biegezone (B2) verbunden ist und der Grundplattenabschnitt (2) durch seine von der Umlaufachse (X) maximal radial auskragenden Bereiche (T) einen Hüllkreis (K1) definiert,
- **dadurch gekennzeichnet, dass** für jeden Radraum (9, 10, 11) der Verlauf der ersten Biegezone (B1) derart festgelegt ist, dass in einer Projektion in eine zur Umlaufachse radiale Ebene eine sich entlang der ersten Biegezone (B1) erstreckende erste Biegeachse (XB1) eine erste Bezugsgerade (g1) innerhalb des Hüllkreises (K1) des Grundplattenabschnitts (2) schneidet, und
- die genannte erste Bezugsgerade (g1) durch die Umlaufachse (X) verläuft und dabei eine zweite Bezugsgerade (g2) die als solche die Umlaufachse (X) und die Planetenachse (P1, P2, P3) des jeweiligen Radraumes (9, 10, 11) verbindet, senkrecht schneidet.

2. Planetenradträger nach Anspruch 1, **dadurch gekennzeichnet, dass** der Schnittpunkt (S) der ersten Biegeachse (XB1) mit der ersten Bezugsgeraden (g1) innerhalb eines Umlaufkreises (K2) der Planetenradachsen (P1, P2, P3) liegt.

3. Planetenradträger nach Anspruch 1 oder 2, **dadurch gekennzeichnet, dass** die erste Biegeachse (XB1) im wesentlichen parallel zur zweiten Bezugsgeraden (g2) verläuft.

4. Planetenradträger nach wenigsten einem der Ansprüche 1 bis 3, **dadurch gekennzeichnet, dass** jeder Deckplattenabschnitt (6, 7, 8) in seinem dem Hüllkreis (K1) zugewandten Randbereich eine Konturierung aufweist die im wesentlichen der dem Hüllkreis (K1) benachbarten Konturierung des Grundplattenabschnitts (2) entspricht.

5. Planetenradträger nach wenigsten einem der Ansprüche 1 bis 4, **dadurch gekennzeichnet, dass** der Grundkörper mit Sicken (18,... 24) versehen ist

6. Planetenradträger nach wenigsten einem der Ansprüche 1 bis 5, **dadurch gekennzeichnet, dass** die Umformung des Grundkörpers als Warmumformung bewerkstelligt wird,

7. Planetenradträger nach wenigsten einem der Ansprüche 1 bis 6, **dadurch gekennzeichnet, dass** der Grundkörper lokal gehärtet ist

8. Planetenradträger nach wenigsten einem der Ansprüche 1 bis 7, **dadurch gekennzeichnet, dass** der Grundkörper einen integral durch Umformung gefertigten Nabenbuchsenabschnitt (16) umfasst.

9. Planetenradträger nach Anspruch 8, **dadurch gekennzeichnet, dass** im Innenbereich des Nabenbuchsenabschnitts (16) eine Verzahnung vorgesehen ist.

10. Planetenradträger mit einem zum Umlauf um eine Umlaufachse (X) vorgesehenen Grundkörper wobei:
- der Grundkörper als Blechumformteil gefertigt ist und einen Grundplattenabschnitt (2), mehrere Stegabschnitte (3, 3', 4, 4', 5, 5') und mehrere Deckplattenabschnitte (6, 7, 8) umfasst,
- die Deckplattenabschnitte (6, 7, 8) über die Stegabschnitte (3, 3', 4, 4', 5, 5') mit dem Grundplattenabschnitt (2) verbunden sind
- zwischen dem Grundplattenabschnitt (2) und dem jeweiligen Deckplattenabschnitt (6, 7, 8) jeweils ein Radraum (9, 10, 11) gebildet ist, zur Aufnahme eines innerhalb des Radraumes um eine Planetenradachse (P1, P2, P3) drehbaren Planetenrades (1),
- jeder Stegabschnitt (3, 3', 4, 4', 5, 5') mit dem Grundplattenabschnitt (2) über eine erste Biegezone (B1) und mit dem jeweiligen Deckplattenabschnitt (6, 7, 8) über eine zweite Biegezone (B2) verbunden ist und der Grundplattenabschnitt (2) durch seine von der Umlaufachse (X) maximal radial auskragenden Bereiche (T) einen Hüllkreis (K1) definiert,
- **dadurch gekennzeichnet, dass** für jeden Radraum (9, 10, 11) der Verlauf der ersten Biegezone (B1) derart festgelegt ist, dass in einer Projektion in eine zur Umlaufachse (X) radiale Ebene eine sich entlang der ersten Biegezone (B1) erstreckende Biegeachse (XB1) eine Bezugsgerade (g2) innerhalb des Hüllkreises (K1) des Grundplattenabschnitts (2) schneidet, und
- die genannte Bezugsgerade (g2) die Umlaufachse (X) und die Planetenachse (P1, P2, P3) des jeweiligen Radraumes (9, 10, 11) verbindet.

## Claims

1. Planet carrier with a basic body provided for orbit around an orbital axis (X):
- the basic body being manufactured as a sheet metal formed part and comprising a baseplate portion (2), a plurality of web portions (3, 4, 5) and a plurality of cover-plate portions (6, 7, 8),
- the cover-plate portions (6, 7, 8) being connected to the baseplate portion (2) via the web portions (3, 4, 5),
- there being formed between the baseplate portion (2) and the respective cover-plate portion (6, 7, 8) in each case a wheel space (9, 10, 11) for receiving a planet wheel (1) rotatable about a planet-wheel axis (P1, P2, P3) inside the wheel space,
- each web portion (3, 4, 5) being connected to the baseplate portion (2) via a first bending zone (B1) and to the respective cover-plate portion (6, 7, 8) via a second bending zone (B2), and the baseplate portion (2) defining an enveloping circle (K1) by means of its regions (T) projecting to the maximum radially from the orbital axis (X),
- **characterized in that**, for each wheel space (9, 10, 11), the profile of the first bending zone (B1) is fixed in such a way that, in a projection into a plane radial to the orbital axis, a first bending axis (XB1) extending along the first bending zone (B1) intersects a first reference straight line (g1) within the enveloping circle (K1) of the baseplate portion (2), and
- the said first reference straight line (g1) runs through the orbital axis (X) and at the same time intersects perpendicularly a second reference straight line (g2) which as such connects the orbital axis (X) and the planet axis (P1, P2, P3) of the respective wheel space (9, 10, 11).

2. Planet carrier according to Claim 1, **characterized in that** the intersection point (S) of the first bending axis (XB1) with the first reference straight line (g1) lies within an orbital circle (K2) of the planet-wheel axes (P1, P2, P3).

3. Planet carrier according to Claim 1 or 2, **characterized in that** the first bending axis (XB1) runs essentially parallel to the second reference straight line (g2).

4. Planet carrier according to at least one of Claims 1 to 3, **characterized in that** each cover-plate portion (6, 7, 8) has in its marginal region facing the enveloping circle (K1) a contouring which corresponds essentially to that contouring of the baseplate portion (2) which is adjacent to the enveloping circle (K1).

5. Planet carrier according to at least one of Claims 1 to 4, **characterized in that** the basic body is provided with beads (18,... 24).

6. Planet carrier according to at least one of Claims 1 to 5, **characterized in that** the forming of the basic body is implemented as hot forming.

7. Planet carrier according to at least one of Claims 1 to 6, **characterized in that** the basic body is locally hardened.

8. Planet carrier according to at least one of Claims 1 to 7, **characterized in that** the basic body comprises a hub-bush portion (16) manufactured integrally by forming.

9. Planet carrier according to Claim 8, **characterized in that** a toothing is provided in the inner region of the hub-bush portion (16).

10. Planet carrier with a basic body provided for orbit around an orbital axis (X):
- the basic body being manufactured as a sheet metal formed part and comprising a baseplate portion (2), a plurality of web portions (3, 3', 4, 4', 5, 5') and a plurality of cover-plate portions (6, 7, 8),
- the cover-plate portions (6, 7, 8) being connected to the baseplate portion (2) via the web portions (3, 3', 4, 4', 5, 5'),
- there being formed between the baseplate portion (2) and the respective cover-plate portion (6, 7, 8) in each case a wheel space (9, 10, 11) for receiving a planet wheel (1) rotatable about a planet-wheel axis (P1, P2, P3) inside the wheel space,
- each web portion (3, 3', 4, 4', 5, 5') being connected to the baseplate portion (2) via a first bending zone (B1) and to the respective cover-plate portion (6, 7, 8) via a second bending zone (B2), and the baseplate portion (2) defining an enveloping circle (K1) by means of its regions (T) projecting to the maximum radially from the orbital axis (X),
- **characterized in that**, for each wheel space (9, 10, 11), the profile of the first bending zone (B1) is fixed in such a way that, in a projection into a plane radial to the orbital axis (X), a bending axis (XB1) extending along the first bending zone (B1) intersects a reference straight line (g2) within the enveloping circle (K1) of the baseplate portion (2), and
- the said reference straight line (g2) connects the orbital axis (X) and the planet axis (P1, P2, P3) of the respective wheel space (9, 10, 11).

## Revendications

1. Porte-satellites comprenant un corps de base prévu pour tourner autour d'un axe de rotation (X), dans lequel :
- le corps de base est fabriqué sous forme de pièce façonnée en tôle et comprend une portion de plaque de base (2), plusieurs portions de porte-satellites (3, 4, 5) et plusieurs portions de plaque de recouvrement (6, 7, 8),
- les portions de plaque de recouvrement (6, 7, 8) sont connectées à la portion de plaque de base (2) par le biais des portions de porte-satellites (3, 4, 5),
- entre la portion de plaque de base (2) et la portion de plaque de recouvrement respective (6, 7, 8) est à chaque fois formé un espace de satellite (9, 10, 11), pour recevoir un satellite (1) pouvant tourner à l'intérieur de l'espace de satellite autour d'un axe de satellite (P1, P2, P3),
- chaque portion de porte-satellites (3, 4, 5) est connectée à la portion de plaque de base (2) par le biais d'une première zone de flexion (B1) et à la portion de plaque de recouvrement respective (6, 7, 8) par le biais d'une deuxième zone de flexion (B2) et la portion de plaque de base (2) définit un cercle d'enveloppement (K1) par ses régions (T) saillant radialement au maximum depuis l'axe de rotation (X),
- **caractérisé en ce que** pour chaque espace de satellite (9, 10, 11), l'allure de la première zone de flexion (B1) est définie de telle sorte qu'en projection dans un plan radial par rapport à l'axe de rotation, un premier axe de flexion (XB1) s'étendant le long de la première zone de flexion (B1) coupe une première droite de référence (g1) a l'intérieur du cercle d'enveloppement (K1) de la portion de plaque de base (2), et
- ladite première droite de référence (g1) s'étend à travers l'axe de rotation (X) et en l'occurrence coupe à angle droit une deuxième droite de référence (g2) qui, en tant que telle, relie l'axe de rotation (X) et l'axe de satellite (P1, P2, P3) de l'espace de satellite respectif (9, 10, 11).

2. Porte-satellites selon la revendication 1, **caractérisé en ce que** le point d'intersection (S) du premier axe de flexion (XB1) avec la première droite de référence (g1) se situe à l'intérieur d'un cercle périphérique (K2) des axes de satellite (P1, P2, P3).

3. Porte-satellites selon la revendication 1 ou 2, **caractérisé en ce que** le premier axe de flexion (XB1) s'étend essentiellement parallèlement à la deuxième droite de référence (g2).

4. Porte-satellites selon au moins l'une quelconque des revendications 1 à 3, **caractérisé en ce que** chaque portion de plaque de recouvrement (6, 7, 8) présente, dans sa région de bord tournée vers le cercle d'enveloppement (K1), un profilage du contour qui correspond essentiellement au profilage du contour de la portion de plaque de base (2) adjacent au cercle d'enveloppement (K1).

5. Porte-satellites selon au moins l'une quelconque des revendications 1 à 4, **caractérisé en ce que** le corps de base est pourvu de moulures (18,... 24).

6. Porte-satellites selon au moins l'une quelconque des revendications 1 à 5, **caractérisé en ce que** le façonnage du corps de base est réalisé par façonnage à chaud.

7. Porte-satellites selon au moins l'une quelconque des revendications 1 à 6, **caractérisé en ce que** le corps de base est trempé localement.

8. Porte-satellites selon au moins l'une quelconque des revendications 1 à 7, **caractérisé en ce que** le corps de base comprend une portion de douille de moyeu (16) fabriquée intégralement par façonnage.

9. Porte-satellites selon la revendication 8, **caractérisé en ce qu'**une denture est prévue dans la région interne de la portion de douille de moyeu (16).

10. Porte-satellites comprenant un corps de base prévu pour tourner autour d'un axe de rotation (X), dans lequel :
- le corps de base est fabriqué sous forme de pièce façonnée en tôle et comprend une portion de plaque de base (2), plusieurs portions de porte-satellites (3, 3', 4, 4', 5, 5') et plusieurs portions de plaque de recouvrement (6, 7, 8),
- les portions de plaque de recouvrement (6, 7, 8) sont connectées à la portion de plaque de base (2) par le biais des portions de porte-satellites (3, 3', 4, 4', 5, 5'),
- entre la portion de plaque de base (2) et la portion de plaque de recouvrement respective (6, 7, 8) est à chaque fois formé un espace de satellite (9, 10, 11), pour recevoir un satellite (1) pouvant tourner à l'intérieur de l'espace de satellite autour d'un axe de satellite (P1, P2, P3),
- chaque portion de porte-satellites (3, 3', 4, 4', 5, 5') est connectée à la portion de plaque de base (2) par le biais d'une première zone de flexion (B1) et à la portion de plaque de recouvrement respective (6, 7, 8) par le biais d'une deuxième zone de flexion (B2) et la portion de plaque de base (2) définit un cercle d'enveloppement (K1) par ses régions (T) saillant radialement au maximum depuis l'axe de rotation (X),
- **caractérisé en ce que** pour chaque espace de satellite (9, 10, 11), l'allure de la première zone de flexion (B1) est définie de telle sorte qu'en projection dans un plan radial par rapport à l'axe de rotation (X), un axe de flexion (XB1) s'étendant le long de la première zone de flexion (B1) coupe une droite de référence (g2) a l'intérieur du cercle d'enveloppement (K1) de la portion de plaque de base (2), et
- ladite droite de référence (g2) relie l'axe de rotation (X) et l'axe de satellite (P1, P2, P3) de l'espace de satellite respectif (9, 10, 11).
